Europäisches Patentamt

European Patent Office

Office européen des brevets

(11) Publication number: **0 306 122**
A2

## (12) EUROPEAN PATENT APPLICATION

(21) Application number: 88303339.1

(22) Date of filing: 13.04.88

(51) Int. Cl.⁴: **B60R 22/26 , B60R 22/20 , B60R 22/46**

(30) Priority: 14.04.87 GB 8708934

(43) Date of publication of application:
08.03.89 Bulletin 89/10

(84) Designated Contracting States:
DE ES FR GB IT

(71) Applicant: **GENERAL ENGINEERING (NETHERLANDS) B.V.**
**Maliebaan 74**
**NL-3581 CW Utrecht(NL)**

(72) Inventor: **Lacher, Bernd**
**Dorfstrasse 40**
**D-2216 Agethorst(DE)**

(74) Representative: **Frankland, Nigel Howard et al**
**FORRESTER & BOEHMERT**
**Widenmayerstrasse 4/I**
**D-8000 München 22(DE)**

(54) **A safety belt arrangement.**

(57) A safety belt arrangement comprises an elongate element (7) having ratchet teeth (14) thereon. A member (20) is movable axially of the element (7) and is connected to a seat belt buckle (5). The member (20) constitutes a locking member and is provided with teeth (28) thereon adapted to be brought into co-operation with the teeth (14) on the element (7) when a force is applied to the locking member (20) from the buckle.

Fig.7.

## "A safety belt arrangement"

THE PRESENT INVENTION relates to a safety belt arrangement and more particularly to a safety belt arrangement for use in an automobile such as a motor car.

In a conventional motor car at least the front seat passengers are provided with a safety belt which has three anchoring points. Two anchoring points for the belt are usually located at the base and at the top of the so-called "B-post" of the vehicle, and the third anchoring point is usually located towards the centre of the car adjacent the squab of the seat. This third anchoring point usually consists of a buckle adapted to receive a tongue mounted on a part of the saftey belt.

It is important, if a safety belt is to retain adqequately a passenger in a motor vehicle involved in an accident, that the safety belt should have the correct geometry relative to the passenger. If the anchoring point located towards the centre of the car is not in the correct position relative to the seat it is possible that the person restrained by the safety belt may "submarine" underneath the lap-portion of the safety belt or may slip out of the safety belt in some other way.

In most modern cars the three anchoring points mentioned above are fixed in position, and in particular it is conventional for the buckle located adjacent the centre of the vehicle to be securely and directly fastened to part of the chassis of the motor vehicle.

The front seats of most motor cars move forwards and backwards, and also, in most modern cars, the squab of the front seat also moves up and down. Such movements of the seat serve to vary the position of a person wearing the saftey belt, and the buckle. As a result, the optimum belt geometry is not always present when there is a crash situation.

It is to be understood, of course, that the seat belt buckle, as mentioned above, withstands a very large force in an accident situation, and it is thus essential that the seat belt buckle is connected, in some way, to the vehicle chassis, such that the seat belt buckle can withstand such a force without moving in an undesirable manner.

DE-3243550-A1 discloses a safety belt arrangement in which the height of the buckle is adjusted automatically in response to adjustment of the height of the seat squab.

The arrangement includes a housing which is securely fixed in position relative to the chassis which defines an elongate slot, the edges of the slot being associated with ratchet teeth. A locking assembly can move up and down relative to the slot. The locking assembly includes a first member, to which the safety belt buckle is securely attached. This first member can move, with a lost motion relative to a second member that is fixed to the car seat.

There are two ratchet members adapted to engage with the ratchet teeth which are normally spring biassed to a dis-engaged position but which are moved, by a cam effect, into an engaged position if the seat belt buckle moves upwardly without a simultaneous upward movement of the member attached to the vehicle seat.

In this arrangement the device is usually in an unlocked condition with the ratchet members spring biassed away from the ratchet teeth and thus the described assembly can usually slide freely up and down the channel as the height of the seat is adjusted. However, in an accident situation, it is often the case that very large forces arise very swiftly, and it is possible that in an accident situation the two ratchet members would not engage the teeth associated with the slot but instead might bounce on the tops of the teeth. Thus locking would not occur and the buckle would move upwardly. In an accident situation this would be extremely undesirable and could even prove to be fatal.

The present invention seeks to reduce or obviate the disadvantages found in the prior art.

According to this invention a safety belt arrangement comprising an elongate element, the elongate element defining a plurality of ratchet teeth thereon, and a member movable axially of the element and having means thereon adapted to be connected to a seat belt buckle wherein the said member constitutes a locking member, and is provided with teeth thereon adapted to be brought into co-operation with the teeth on the element when a force is applied to the member from the buckle.

Preferably spring biasing means are provided to bias the locking member into a position where the teeth thereon engage the teeth on the element.

Conveniently wherein means are provided which operate in response to upward or downward movement of the squab of the seat to disengage the teeth on the locking member from the teeth on the element to permit axial movement of the locking member.

Advantageously said disengaging means comprise an elongate element connected to the locking member and extending beyond the sides of the element and means provided on the squab of the seat carrying two projecting pegs adapted to engage the ends of the elongate member on upward or downward movement of the squab to cause the locking member to tilt to such a position that the teeth formed thereon are disengaged from the teeth on the element, the locking member is releasably connected to the elongate member, a pretensioning device being provided adapted to apply a downward force to the locking member in an accident situation, to separate the locking member from the elongate member and move the locking member downwardly.

Preferably the locking member comprises a protruding peg which extends through an elongate slot formed in the element adapted to be engaged by part of said pre-tensioners.

Conveniently the elongate element defines two resilient clips which each grip a pin forming part of the locking member.

Preferably the locking member is provided with two opposed arcuate surfaces, the arcuate surfaces having a common centre of curvature and appropriate radius of curvature, such that the distance between two opposed points on the arcuate faces through the centre of curvature thereof is substantially equal to the distance between two opposed side walls of a channel within the element in which the locking member is slidably mounted.

Conveniently the element is a hollow housing which defines a slot with two inwardly directed rows of said teeth directed inwardly towards the interior of the element on either side of said slot the locking member having a portion adapted to extend through the slot and having teeth thereon located on either side of said portion, the portion being adapted to be connected to a seat belt buckle.

In order that the invention may be more readily understood, and so that further features thereof may be appreciated the invention will now be described by way of example with reference to the accompanying drawings in which

FIGURE 1 is a side view of part of a seat present in a motor vehicle showing an associated buckle to engage part of a safety belt, and showing how the buckle is mounted in position,

FIGURE 2 is a perspective view, with parts cut away, of a housing forming part of the mounting arrangement of Figure 1

FIGURE 3 is a perspective view of a plate secured to the seat in Figure 1,

FIGURE 4 is a perspective view of a locking member located within the housing shown in Figure 2,

FIGURE 5 is a perspective view of a retaining member present within the housing of Figure 1, adapted to retain the locking member,

FIGURE 6 is a front view of the housing of Figure 2 assembled together with the components of Figures 3 to 5, with parts cut away, illustrating the components in one condition,

FIGURE 7 is a view corresponding to Figure 6 showing the components in a second condition,

FIGURE 8 is a view corresponding to Figure 6 showing the components in a further condition and

FIGURE 9 is a further view corresponding to Figure 6 showing the components in another condition.

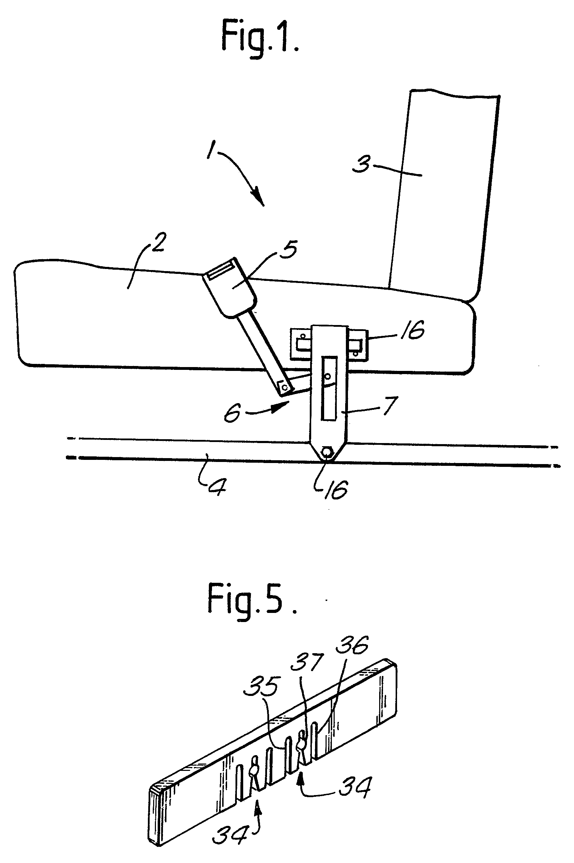

Referring initially to Figure 1 of the accompanying drawings a seat 1 in the front of a motor vehicle has a squab 2 and a back 3. The seat is supported on a tubular carriage 4 which slides along a rail (not shown) secured firmly to the floor of the vehicle.

A buckle 5 of conventional design is located adjacent the squab of the seat 2. This buckle is adapted to receive a tongue present on part of a safety belt, as is conventional.

The buckle 5 is mounted in position by a mounting arrangement 6 which will be described in greater detail hereinafter. However, it is to be understood, at this stage, that the mounting arrangement 6 is such that as the squab 2 of the seat is lowered, so the buckle 5 will also be lowered by a similar amount, and when the squab 2 of the seat is raised, the buckle 5 will also be raised by a similar amount. Since, as will be described, the mounting arrangement 6 is connected to the carriage 4 on which the seat 1 is mounted, the buckle 5 will move forwardly and rearwardly in synchronism with the seat. Thus the buckle 5 will always be in precisely the same position relative to the squab 2 of the seat 1.

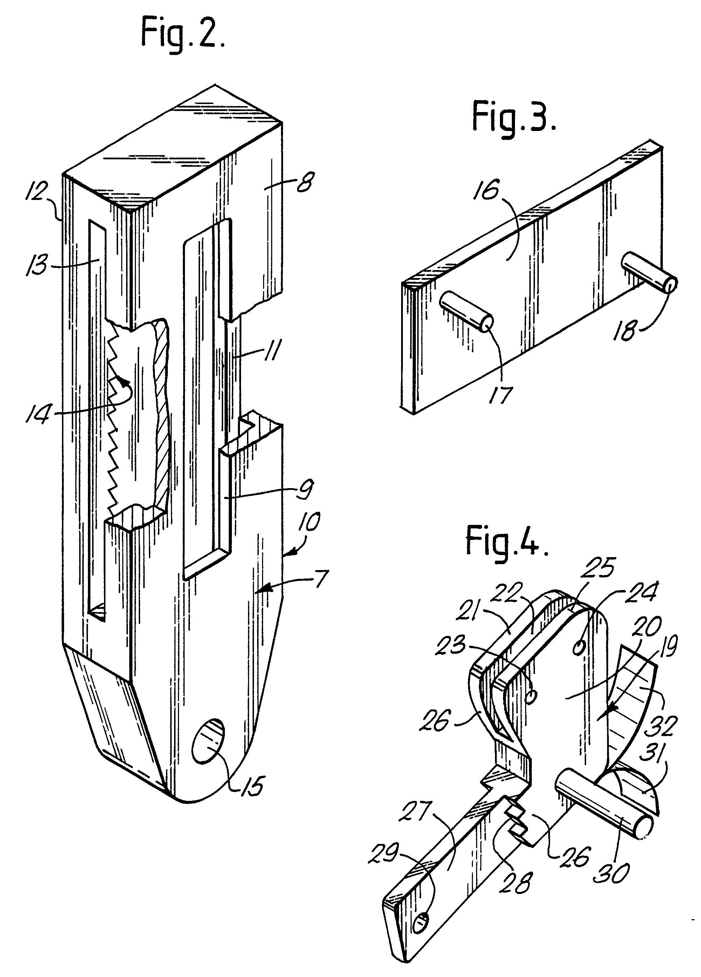

The mounting arrangement 6 consists of an elongate housing 7 which can be seen more clearly in Figure 2. The housing 7 is of rectangular section. A front face 8 of the housing is provided with an elongate vertical slot or aperture 9 centrally located extending over a substantial proportion of the overall height of the housing 7. On side face 10 is provided with a slot 11 extending also over a substantial proportion of the height of the housing. The opposed side face 12 is provided with a further slot 13 which extends over substantially the entire height of the housing. However, the walls which define the slot 13 define, on their interior faces, a plurality of projecting teeth 14. Thus, if the slot 13 were viewed from the interior of the housing 7, the slot would be seen to have teeth 14 located on either side of the slot, the teeth being directed towards the interior of the housing.

The entire interior of the housing is hollow, and the housing, adjacent its lower end, is provided with a through bore 15 dimensioned to receive a bolt utilised to secure the housing, in a substantially vertical position, to the rail 4 supporting the seat 1.

A plate 16 is provided which is mounted on the squab of the seat. The plate 16 is provided with two projecting pins 17,18 extending forwardly from the plate 16. The plate 16 is of rectangular configuration, and the projecting pin 17 is located adjacent the top left-hand corner, and the projecting pin 18 is located adjacent the bottom right-hand corner of the plate 16 as illustrated in Figure 3. The plate may be secured to the squab of the seat in any appropriate manner.

A locking member 19 is provided, which is a separate component, the locking member being inserted within the interior of the housing 7 and being movable up and down within the interior of the housing 7.

The locking member 19 consists of an upper portion 20, of generally rectangular configuration, but having rounded side faces as will be described hereinafter. The uppermost edge 21 of the portion 20 is provided with a transverse slot 22, and two pins 23,24 are provided which extend across the slot 22. A first upper portion of the member 19, adjacent one end of the slot, is of arcuate form 25, having a centre of curvature which is centred on the axis of the pin 24. An opposed face 25' of the member 19, is also of arcuate form, again having a centre of curvature coincident with the axis of the pin 24. The linear distance between points on the arcuate faces as measured through the axis of the pin 24 is equal to the distance, on the interior of the housing 7, between the interior of the side wall 10, and the interior of the side wall 12, as defined by the points of the teeth 14.

The locking member 19 is provided, at the base of the region 20, with a projection 26, which extends to one side. The projection continues with a central projecting tongue 27 of reduced width. The end faces of the projection 26, adjacent the base of the central tongue 27 are provided with teeth or serrations 28. Towards the end of the tongue 27 an aperture 29 is formed.

Projecting from the front face of the locking member 19, as shown in Figure 4, at a position at the junction of the main portion 20 and the extending portion 26, is a pin 30.

Secured to and extending rearwardly from the lower face of the locking member 19 as shown in Figure 4 are two oppositely directed leaf springs 31,32.

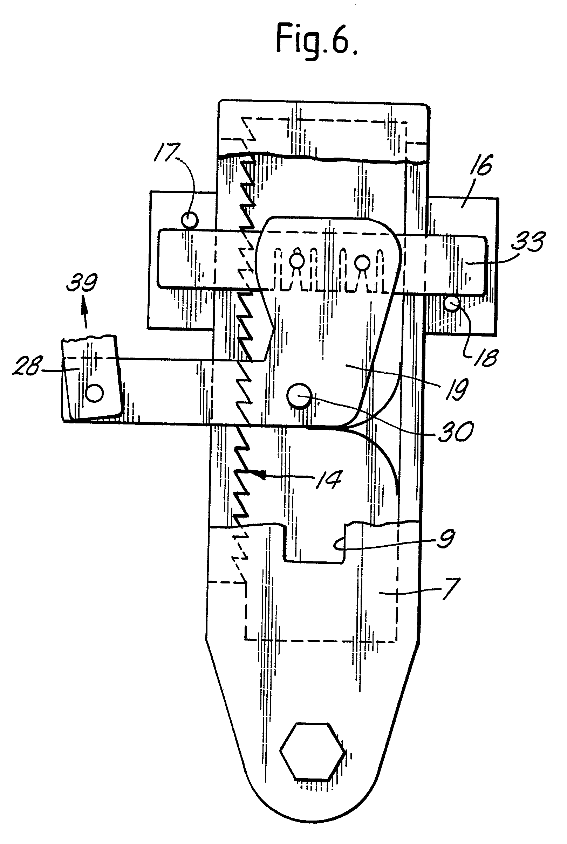

Figure 5 illustrates a retaining member adapted to retain the locking member of Figure 4. The retaining member 33 consists of an elongate strip of material. The strip of material is provided with recesses forming two releasable catches 34 at spaced positions in one edge of the strip. Each catch 34 is formed by two spaced apart parallel slits 35,36, centrally disposed between which is a key-hole-shaped slot 37. The nature of the material forming the retaining member 33 is such that the fingers formed between the slits 35,36 and the slot 37 are resilient. The dimensioning of the retaining element 33 is such that the strip 33 may be inserted into the slot 22 and the catches 34 may be snapped into engagement with the pins 23 and 24.

This can be seen from Figure 6, when the retaining element has been connected to the locking member, and the combination has been inserted within the housing 7 with the ends of the retaining element passing through the opposed slots 11,13, and with the locking member so oriented that the teeth or serrations 28 are brought into engagement with the serrations or teeth 14 formed on the housing 7 under the biassing influence of the leaf springs 31,32 which engage the interior of the side wall 10 of the housing 7. It can be seen that since the rounded portions 25,25' are both of arcuate form, and both have a centre of curvature which is coincident with the axis of the pin 24, and since the spacing between two points on these arcuate portions 25,25' taken through the axis of the pin 24 is equal to the distance between the interior faces of the wall 10 and 12 of the housing 7, then the locking member 19 is able to rotate effectively about an axis which is coincident with the axis of the pin 24.

It can be seen that, when the locking member 19 is in position within the housing, the central tongue 27 passes through the slot 13, and an element 38 which is connnected to a seat belt buckle may be bolted to the aperture 29.

The plate 16 is located adjacent the housing, with the pins 17 and 18 located adjacent the ends of the retaining element 33 which project through the slots 11 and 13. It can be seen that the pin 17 is located adjacent the upper left-hand end of the retaining element 33, and the pin 18 is located adjacent the lower right-hand end of the retaining element 33 as illustrated in Figure 6.

It will be appreciated, from a consideration of Figure 6, that the springs 31 and 32 bias the teeth 28 on the locking member into firm engagement with the teeth 14 on the housing. If an upward force in the direction of the arrow 39 is applied to the member 38, that force will be transferred, by the engagement of the teeth 28 and the teeth 14 to the housing 7 which is firmly retained in position by the retaining bolt.

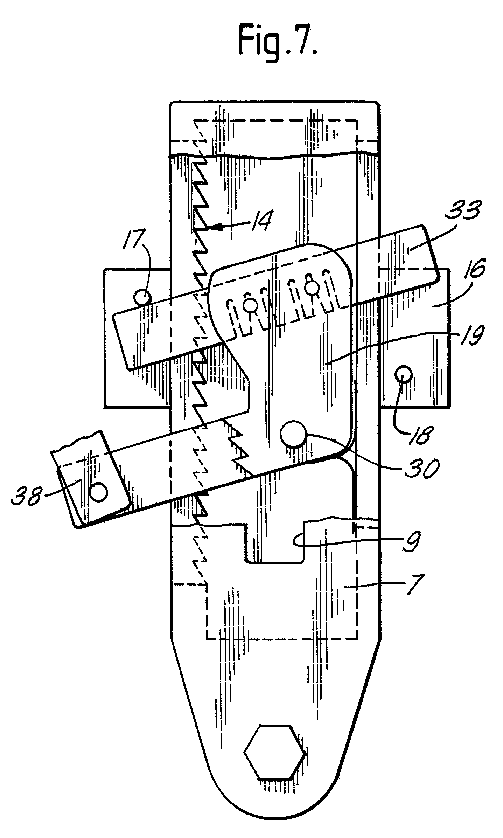

If the squab 2 of the seat 1 is moved downwardly from the position illustrated in Figure 6, then the condition illustrated in Figure 7 will arise. As the squab of the seat moves downwardly, so the pin 17 will engage and apply a downward force to the left-hand end of the retaining element 33. This will cause the locking member 19 to rotate about the axis defined by the pin 24, with the curved portion 25 of the locking member 19 remaining in engagement with the interior of the housing and effecting a rolling motion along the interior of the wall 10. This will, of course, resiliently deform the springs 31 and 32. However, the teeth 28 on the locking member will become disengaged from the teeth 14 on the interior of the housing, and thus the locking member may move downwardly under the force applied thereto by the pin 17.

When the downward movement of the seat squab has ceased, the springs 31,32 will bias the locking member 19 back into a locking condition, similar to that as illustrated in Figure 6, but at a lower position within the housing. The buckle 5 will thus, at the end of this operation, have exactly the same position as it had initially relative to the seat squab 2, and will be able to withstand any forces applied to it in an accident situation.

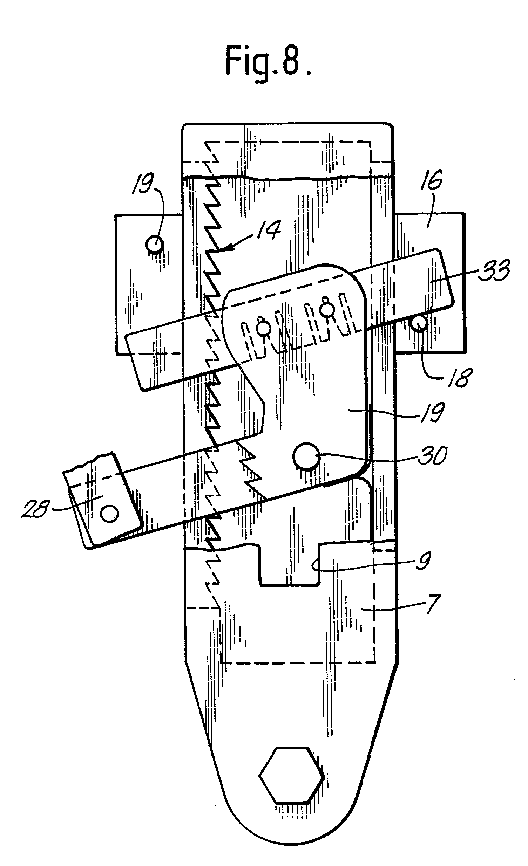

If, on the other hand, the seat squab is to be raised, the plate 16 will move upwardly, and the pin 18 will engage the lower right-hand end of the retaining element 33, thus again causing the locking member to pivot about an axis coincident with the axis of the pin 24, as illustrated in Figure 8, with the curved portion 26 of the housing effectively rolling along the tips of the teeth or serrations 14. Again the teeth 28 on the locking member will be disengaged from the teeth 14 on the housing, enabling the locking member to move upwardly. Again the springs 31 and 32 will be resiliently deformed.

When the upward movement of the squab of the seat ceases, the springs 31,32 will return the locking member to its initial position, or a position slightly spaced vertically therefrom.

It will thus be appreciated that if the seat squab is moved upwardly or downwardly the buckle 5 will move effectively in synchronism with the seat squab.

The described embodiment of the invention has been designed so that it can be used, in conjunction with a seat belt pre-tensioner.

It has been proposed previously to provide a pre-tensioner to apply a predetermined tension to a seat belt in an accident situation. The reason for this is that in a normal accident situation, a certain length of safety belt is paid out by a retractor reel before it locks. This enables a passenger restrained by the safety belt to move forwardly relative to the vehicle. The passenger will the be decelerated, relative to the vehicle, by the safety belt which will inevitably stretch to a certain extent. Also if a passenger is earing loose fitting clothing this will be compressed, again permitting the passenger to move forwards. The combination of the forward movement of the passenger and the subsequent stretch of the belt may be sufficient to cause the passenger to come into contact with the windscreen or the steering wheel with a sufficient momentum to injure himself. Thus a pre-tensioner applies a tension to the safety belt, thus serving to minimise this effect. This is achieved, in many pre-tensioners, by effecting a downward force on the buckle, such as the buckle 5.

A typical pre-tensioner is disclosed in European Patent publication 0239925, to which Specification the present reader is addressed.

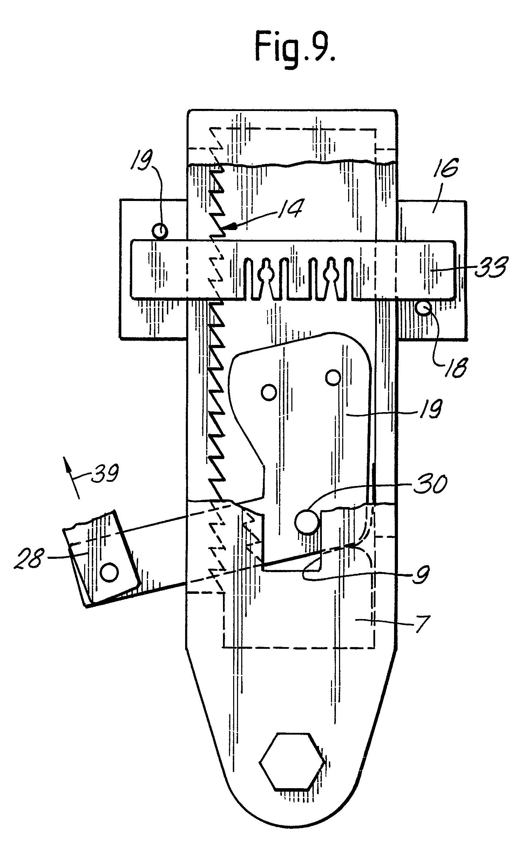

The locking member 19 is provided with a pin 30 which projects forwardly of the housing 7 through the elongate slot 9. It is intended that this pin is for use with a pre-tensioner arrangement, the pre-tensioner arrangement being designed so that it applies a downward force to the pin 30, should an accident situation arise. The downward force applied to the pin 30 is sufficient that the locking member 19 becomes unclipped from the retaining element 33. It is to be recalled that the retaining element 33 receives the pins 23 and 24 between resilient fingers which define between them a keyhole slot 37. Thus the force applied to the pin 30 by the envisaged pre-tensioning device causes the locking member to be released from the retaining element 33, and also pivots the locking member so that the teeth 28 are disengaged from the teeth 14. The locking member 19 can then move downwardly within the hollow interior of the housing 7 to a relatively low position as illustrated in Figure 9. When in that position any upward force received from the buckle, will be received in the direction of the arrow 39, which will tend to cause the locking member to rotate in a clockwise sense and it will be observed that if this happens the teeth 28 will re-engage with the teeth 14, thus effectively retaining the locking member in its new lower position.

It is to be understood that after a pre-tensioner has operated it is important that the buckle is retained in the position to which it is moved by the pre-tensioner, and the arrangement as described and illustrated in this Specification will perform this function.

While the housing 7 has been described mounted on an element which moves forwardly and backwardly with the seat 1, the housing 7 could be secured directly to an anchoring point on the floor of the vehicle. The housing 7 would then pivot as the seat is moved forwardly and backwardly. The elements mounted on the seat to adjust the position of the locking member might need to be slightly modified in such an arrangement.

## Claims

1. A safety belt arrangement comprising an elongate element(7), the elongate element defining a plurality of ratchet teeth(14) thereon, and a member(20) movable axially of the element(7) and having means thereon(27) adapted to be connected to a seat belt buckle(5) characterised in that the said member(20) constitutes a locking member, and is provided with teeth(28) thereon adapted to be brought into co-operation with the teeth(14) on the element(7) when a force is applied to the member(20) from the buckle(5).

2. A safety belt arrangement according to Claim 1 wherein spring biassing means(31,32) are provided to bias the locking member(20) into a position where the teeth(28) thereon engage the teeth(14) on the element(7).

3. A safety belt arrangement according to Claim 1 or 2 wherein means are provided which operate in response to upward or downward movement of the squab(2) of the seat to disengage the teeth(28) on the locking member(20) from the teeth(14) on the element(7) to permit axial movement of the locking member(20).

4. A safety belt arrangement according to Claim 3 wherein said disengaging means comprise an elongate element(33) connected to the locking member(20) and extending beyond the sides of the element(7) and means provided on the squab of the seat carrying two projecting pegs(17,18) adapted to engage the ends of the elongate member(33) on upward or downward movement of the squab(2) to cause the locking member(20) to tilt to such a position that the teeth(28) formed thereon are dis engaged from the teeth(14) on the element(7).

5. A safety belt arrangement according to Claim 4 wherein the locking member(20) is releasably connected to the elongate member(33), a pre-tensioning device being provided adapted to apply a downward force to the locking member(20) in an accident situation, to separate the locking member-(20) from the elongate member(33) and move the locking member(20) downwardly.

6. A safety belt arrangement according to Claim 5 wherein the locking member comprises a protruding peg(30) which extends through an elongate slot(9) formed in the element(7) adapted to be engaged by part of said pre-tensioners.

7. An arrangement according to Claim 5 or 6 wherein the elongate element(33) defines two resilient clips(30) which each grip a pin(23,24) forming part of the locking member(20).

8. A safety belt arrangement according to any one of Claims 1 to 7 wherein the locking member-(20) is provided with two opposed arcuate surfaces(25,25'), the arcuate surfaces having a common centre of curvature and appropriate radius of curvature, such that the distance between two opposed points on the arcuate faces through the centre of curvature thereof is substantially equal to the distance between two opposed side walls-(10,12) of a channel within the element(7) in which the locking member(20) is slidably mounted.

9. A locking arrangement according to any one of the preceding Claims wherein the element(7) is a hollow housing which defines a slot(13) with two inwardly directed rows of said teeth(14) directed inwardly towards the interior of the element(7) on either side of said slot(13) the locking member(20) having a portion(27) adapted to extend through the slot and having teeth(28) thereon located on either side of said portion(27), the portion(27) being adapted to be connected to a seat belt buckle.

EP 0 306 122 A2

# Fig.1.

# Fig.5.

# Fig.2.

12
13
14

8
11
9
10
7
15

# Fig.3.

16
17
18

# Fig.4.

21
22
23
25
24
26
20
19
32
31
27
29
28
26
30

# Fig.6.

# Fig.7.

# Fig.8.

# Fig.9.